# EUROPÄISCHE PATENTSCHRIFT

(11) **EP 1 067 836 B1**
(45) Veröffentlichungstag und Bekanntmachung des Hinweises auf die Patenterteilung: **11.06.2003**
(21) Anmeldenummer: 99914537.8
(22) Anmeldetag: 24.03.1999
(51) Int. Cl.: A01N 25/32, C09K 17/22

(54) **VERFAHREN ZUR VERMINDERUNG DER PFLANZENVERFÜGBARKEIT VON SCHWERMETALLEN SOWIE VERWENDUNG VON VERNETZTEN POLY(METH)ACRYLATEN IN DEM VERFAHREN**
METHOD FOR REDUCING THE AVAILABILITY OF HEAVY METAL NUTRIENTS AND THE USE OF CROSS-LINKED POLY(METH)ACRYLATES IN SAID METHOD
PROCEDE PERMETTANT DE DIMINUER LA BIODISPONIBILITE DES METAUX LOURDS POUR LES VEGETAUX ET UTILISATION DE POLY(METH)ACRYLATES RETICULES DANS LEDIT PROCEDE

(30) Priorität: 26.03.1998 DE 19813425
(43) Veröffentlichungstag der Anmeldung: 17.01.2001
(73) Patentinhaber: STOCKHAUSEN GmbH & Co. KG, 47805 Krefeld (DE)
(72) Erfinder: HÜTTERMANN, Aloys, D-37075 Göttingen (DE); ZOMORRODI, Moitoba, D-37077 Göttingen (DE)
(86) Internationale Anmeldenummer: EP9902008
(87) Internationale Veröffentlichungsnummer: WO99048360

(56) Entgegenhaltungen:
- EP-A- 0 072 213
- EP-A- 0 415 141
- WO-A-90/09236
- O. A. EL-HADY, A. A. LOTFY & B. M. ABD EL-HADY: "The interaction between Polyacrylamide as a conditioner for sandy soils and some plant nutrients. II Effect on the extractability of nutrients." EGYPT. J. SOIL SCI., Bd. 30, Nr. 4, 1990, Seiten 545-557, XP002108706 in der Anmeldung erwähnt

## Beschreibung

Die vorliegende Erfindung betrifft ein Verfahren zur Verminderung der Pflanzenverfügbarkeit von Schwermetallen sowie Verwcndung von vernetzten Poly(meth)acrylaten in dem Verfahren.

Es ist bisher keine Methode bekannt, mit der eine Aufhebung der Wirkung von Schwermetallen auf Pflanzen in schwermetallbelasteten Böden erreicht worden ist.

Um Flächen mit schwermetallhaltigen Böden zu bepflanzen, werden derzeit zwei Verfahren eingesetzt, entweder wird auf die belasteten Böden Mutterboden aufgebracht oder der Boden wird abgeräumt und durch Mutterboden ersetzt, wobei dis Mächtigkeit der eingesetzten Mutterbodenschicht in der Regel über ein Meter betragen muß. Alle diese Verfahren sind sehr aufwendig und mit großen Kosten verbunden.

Bisher durchgeführte Versuche, durch Zugabe von Polyacrylaten die Pflanzenverfügbarkeit von Schwermetallen zu reduzieren, waren entweder erfolglos (El-Hady O. A., Lotfy A. A., El-Hady, B. M. A.. Egyptian-Journal-of-Soil-Science. 30: 4, 545-557 (1990)) oder hatten den Effekt, daß die Verfügbarkeit von Schwermetallen wie Blei, Nickel, Mangan oder Eisen deutlich erhöht wurde (Mikkelsen, R.L., Fertiliser Research 41, 87 - 92 (1995), Mortvedt, J.J., Mikkelsen, R.L., Kelsoe, J.H. Soil-Science-Society-of-America-Journal., 56: 4, 1319-1324 (1992); Awad-F; Kahl L; Kluge-R; Abadia-J in: Iron nutrition in soils and plants. Proceedings of the Seventh International Symposium Zaragoza, Spain, 27 June-2 July 1993. Kluwer Academic Publishers; Dordrecht 1995, 53-62; Mortvedt, J. J., Mikkelsen, R.L., Behel, A. D. Jr. Journal-of-Plant-Nutrition, 15: 10, 1913-1926(1992).

Überraschenderweise wurde gefunden, daß bei einem Zusatz von vemetzten Poly(meth)acrylaten zu Schwermetall-belasteten Substratcn, die Pflanzenverfügbarkeit von Schwermetallen deutlich verringert bzw. völlig aufgehoben wird.

In den Substraten befindliche Schwermetalle werden durch die negativ geladenen Carboxylgruppcn der Poly(meth)acrylate abgefangen, so daß diese für die Pflanzen nicht mehr verfügbar sind. Dieser Effekt bleibt über einen langen Zeitraum beständig erhalten, überraschenderweise sogar über einen Zeitraum von vielen Monaten. Dies war insbesondere aufgrund der obigen Befunde für den Fachmann nicht zu erwarten und ermöglicht eine langfristige Aufhebung der Wirkung der Schwermetalle in Schwermetall - belasteten Böden.

Die Substrate, beispielsweise Böden oder Hydrokulturen, werden mit den vernetzten Poly(meth)acrylaten behandelt, insbesondere durch Einmischen, wobei Mengen von 0,1 % bis 2,5 % bezogen auf die gesamte Substratmasse Verwendung finden, bevorzugt Mengen 0,5 bis 2,0 % und insbesondere etwa 0,2-0,8 %, speziell 0, 4 - 0,6 %.

Dabei wird der Boden bis in eine Tiefe von etwa 50 cm, bevorzugt von 30 cm und insbesondere von etwa 40 cm ausgehoben und mit den Poly(meth)acrylaten vermischt.

Als erfindungsgemäß einzusetzende Poly(meth)acrylate eignen sich alle vernetzten, carboxylatgruppen enthaltenden Poly(meth)acrylate die Hydrogele ausbilden.

Insbesondere sind als erfindungsgemäß einzusetzende, Carboxylatgruppen enthaltende Poly(meth)acrylate solche geeignet, die in erster Linie und bevorzugt aus den Monomeren Acrylsäure, Acrylamid, Methacrylsäure und Methacrylamid aufgebaut sind, ferner aber auch andere wasserlösliche Monomeren, wie Acrylnitril, Methacrylnitril, N,N-Dimethylacrylamid, Vinylpyridin sowie weitere wasserlösliche polymerisationsfähige Säuren und ihre Salze, insbesondere die Malein-, Fumar-, Itacon-, Vinylsulfon- oder Acrylamidomethylpropansulfonsäure; ferner hydroxygruppenhaltige Ester polymerisationsfähiger Säuren, insbesondere die Hydroxyethyl- und hydroxypropylester der Acryl- und der Methacrylsäure; weiter aminogruppenhaltige und ammoniumgruppenhaltige Ester und Amide polymerisationsfähiger Säuren wie die Dialkylaminoester, insbesondere die Dimethyl- und die Diethylaminoalkylester der Aerylund der Methacrylsäure, sowie die Trimethyl- und Trimethylammoniumalkylester sowie die entsprechenden Amide. Die erfindungsgemäß einzusetzenden Poly(meth)acrylate können ausschließlich aus vorstehend genannten, carboxylatgruppenhaltigen Monomeren gebildet sein oder aber mit den keine Carboxylatgruppen tragenden Monomeren in einem Copolymerisat kombiniert sein. In den Copolymeren liegt der Anteil der Carboxylatmonomeren bei 90 bis 10 Mol %, vorzugsweise bei 60 bis 30 Mol %.

In geringen Mengen können noch zusätzlich gering oder völlig wasserunlösliche Monomere mit den vorstehenden Monomeren copolymerisiert werden wie etwa Vinylester und die Ester der Acryl- und/oder Methacrylsäure mit C₁-C₁₀-Alkoholen, Styrol und alkylierte Styrole. Im allgemeinen liegt der Anteil an den wasserlöslichen Monomeren bei 80 bis 100 Gew%, bezogen auf die Gesamtheit der Monomeren. Die wasserunlöslichen (hydrophoben) Monomeren machen in der Regel 0 bis 20 Gew% der Monomeren aus.

Die sauren Monomerbestandteile können vor der Polymerisation neutralisiert werden, wobei der Neutralisationsgrad bevorzugt zwischen 10 und 95 Mol% liegt, insbesondere zwischen 50 und 90 Mol%, sowie insbesondere zwischen 70 und 95 Mol%. Als Basen kommen für die Neutralisation alle gängigen anorganischen und organischen Verbindungen in Betracht, insbesondere werden bevorzugt Natronlauge, Kalilauge und Ammoniak (Ammoniumhydroxid).

Zusammen mit den o.g. Monomeren werden in geringen Anteilen vemetzende Monomere mit mehr als einer reaktionsfähigen Gruppe im Molekül mitpolymerisiert. Dabei entstehen teilvernetzte Polymerisate, die nicht mehr in Wasser löslich sondern nur quellbar sind. Als vernetzende Monomere seien beispielsweise bi- oder mehrfunktionelle Monomere, z.B. Amide wie das Methylenbisacryl- bzw. -methacrylamid oder Ethylenbisacrylamid, ferner Allylverbindungen wie Allyl(meth)acrylat, alkoxyliertes Allyl(meth)acrylat mit vorzugsweise 1 bis 30 Mol Ethylenoxid umgesetzt, Triallylcyanurat, Malcinsäurediallylester, Polyallylester, Tetraallyloxiethan, Triallylamin, Tetraallylethylendiamin, Allylester der Phosphorsäure bzw. phosphorigen Säure, ferner vernetzungsfähige Monomere, wie die N-Methylolverbindungen von Amiden wie dem Methacrylamid bzw. Acrylamid und die davon abgeleiteten Äther sowie Ester von Polyolen und alkoxylierten Polyolen, wie Diacrylate oder Triacrylate z.B. Butandioloder Ethylenglykoldiacrylat, Polyglykol-di-(meth)acrylate, Trimethylolpropantriacrylat, Di- und Triacrylatester des, vorzugsweise mit 1 bis 30 Mol Alkylenoxid oxalkylierten (ethoxylierten) Trimethylolpropans, Acrylat- und Methacrylatester von Glycerin und Pentaerythrit, sowie des mit vorzugsweise 1 bis 30 Mol Ethylenoxid oxethylierten Glycerins und Pentaerythrits Bevorzugt werden Methylen- bzw. Ethylenbis(meth)acrylamid, N-Methylolacrylamide und Triallylamin verwendet. Der Anteil an den vernetzenden Comonomeren liegt bei 0,01 bis 2,5 Gew%, bevorzugt bei 0,01 bis 1,0 Gew% und besonders bevorzugt bei 0,01 bis 0,1 Gew.%, bezogen auf die Gesamtheit der Monomeren.

Die erfindungsgemäß einzusetzenden, Carboxylatgruppen enthaltenden Polymere können wasserlösliche Polymere als Pfropfgrundlage enthalten, wobei Mengen bis zu 30 Gew.% bevorzugt sind. Dazu zählen unter anderem teil- oder vollverseifte Polyvinylalkohole, Stärke oder Stärkederivate, Cellulose oder Cellulosederivate, Lignin oder Ligninderivate Polyacrylsäuren, Polyglykole oder deren Gemische.

In einer bevorzugten Ausführungsform sind die erfindungsgemäß einzusetzenden Polymere nachvemetzt. Zur Nachvernetzung, die zu einer deutlichen Verbesserung der Gelstabilität, der Flüssigkeitsaufnahme unter Druck und der Aufnahmegeschwindigkeit führt, werden Verbindungen eingesetzt, die in der Regel mindestens zwei funktionelle Gruppen besitzen und die die funktionellen Gruppen des Polymerisates an der Oberfläche der Polymerteilchen vernetzen können. Dabei sind Alkohol-, Amin-, Aldehyd- Glycidyl- und Epichlorfunktionen bevorzugt, wobei auch Vernetzermoleküle mit mehreren verschiedenen Funktionen einsetzbar sind. Beispielhaft seien die folgenden Nachvemetzungsmittel genannt: Ethylenglykol, Diethylenglykol, Triethylenglykol, Polyethylenglykol, Glycerin, Polyglycerin, Propylenglykol, Diethanolamin, Triethanolamin, Polypropylenoxyd, Blockcopolymere aus Ethylenoxyd und Propylcnoxyd, Sorbitanfettsäureester, ethoxylierte Sorbitanfettsäureester, Trimethylolpropan, ethoxyliertes Trimethylolpropan, Pentaerythrit, ethoxyliertes Pantaerythrit, Polyvinylalkol, Sorbit, Ethylencarbonat, Proypylencarbonat und Polyepoxide wie etwa Ethylenglykoldiglycidylether. Bevorzugt wird mit Ethylencarbonat als Nachvemetzungsmittel gearbeitet. Das Nachvernetzungsmittel wird in einer Menge von 0,01 bis 10 Gewichtsprozent, bevorzugt 0,1-5 Gewichtsprozent, besonders bevorzugt 0,1-1 Gewichtsprozent bezogen auf das nachzuvernetzende Polymer eingesetzt.

Die Herstellung der erfindungsgemäß einzusetzenden Poly(meth)acrylate kann nach üblichen Verfahren durchgeführt werden, bevorzugt wird in wäßriger Lösung diskontinuierlich in einem Polymerisationsgefäß oder kontinuierlich, etwa auf einem endlosen Band polymerisiert. Die Polymerisationsauslösung erfolgt mit üblichen, eine radikalische Polymerisation auslösenden Initiatoren bzw. Redoxsystemen. Bei einem praktisch adiabatischen Verlauf der Polymerisation entsteht bei entsprechender Anfangskonzentration von 15 bis 50 Gew% der Monomeren ein wäßriges Polymergel, Durch die Wahl der Anfangsmonomerkonzentration und der entsprechenden niedrigen Starttemperatur im Temperaturbereich von 0 bis 50 °C, bevorzugt von 5 bis 25 °C, kann die Polymerisation so geführt werden, daß die Maximaltemperatur im entstehenden wäßrigen Polymergel gut beherrschbar ist. Nach beendeter Polymerisation wird das Polymergel mechanisch zerkleinert, getrocknet, gemahlen und gegebenenfalls einer Oberflächenvemetzung unterzogen.

Weiterhin ist zur Herstellung der Poly(meth)acrylate auch das Suspensionspolymerisationsverfahren geeignet, bei dem die diskreten Polymerteilchen bereits während der Polymerisation ausgebildet werden.

Bei der Zugabe der Oberflächennachvemetzer ist auf eine starke Durchmischung der Polymerteilchen zu achten. Geeignete Mischaggregate zum Aufbringen des Nachvernetzungsmittels sind z.B. Patterson-Kelley-Mischer, DRAIS-Turbulenzmischer, Lödigemischer, Ruberg-Mischer, Schneckenmischer. Tellermischer und Wirbelschichtmischer sowie kontinuierlich arbeitende senkrechte Mischer, in denen das Pulver mittels rotierender Messer in schneller Frequenz gemischt wird (Schugi-Mischer). Nachdem der Nachvernetzer, vorzugsweise in Form einer Lösung mit den Polymerteilchen vermischt worden ist, wird zur Durchführung der Nachvernetzungsreaktion auf Temperaturen von 80 bis 250 °C, bevorzugt auf 135 bis 250°C und besonders bevorzugt auf 150 bis 200°C erhitzt. Die optimale Zeitdauer der Nacherhitzung kann für die einzelnen Vernetzertypen mit wenigen Versuchen leicht ermittelt werden. Sie ist durch den Punkt begrenzt, bei dem das gewünschte Eigenschaftsprofil des Superabsorbers infolge von Hitzeschädigung wieder zerstört wird. Beispielsweise liegen die Vernetzungszeiten für Temperaturen von 180°C für gewöhnlich unter 30 Minuten.

Die Poly(meth)acrylate können weiterhin Verarbeitungs-und Konditionierungshilfsmittel wie beispielsweise Kaliumstearat, Polyglykol, Kieselsäuren, Bentonite enthalten.

Der Restmonomergehalt der erfindungsgemäß einzusetzenden Poly(meth)acrylate ist gering und beträgt weniger als 1000 ppm, bevorzugt weniger als 500 ppm und besonders bevorzugt weniger als 250 ppm. Insbesondere liegt der Restgehalt von ökotoxikologisch bedenklichen Monomeren wie Acrylamid bevorzugt unter 250 ppm.

Das Absorptionsvermögen der erfindungsgemäß einzusetzenden Poly(meth)acrylate für Wasser und wäßrige Lösungen kann in weiten Grenzen schwanken und wird durch die Monomerbestandteile. die Vernetzer und gegebenenfalls die Nachvernetzer eingestellt.

Bevorzugt werden solche Poly(meth)acrylate eingesetzt, die von einer synthetischen Bodenlösung mit einer Leitfähigkeit von 2,5 µS mehr als 30 g/g bevorzugt mehr als 50 g/g und besonders bevorzugt mehr als 65 g/g Polymer absorbieren. Die synthetische Bodenlösung enthält auf 10 1 Wasser 0,71 g NaCl, 0,065 g NaN₃, 1,676 g KCl, 0,353 NH₄Cl, 3,363 g MgCl₂ 6H₂O, 10,5 g CaCl₂ 2H₂O und 0,019 g FeCl₃ 6H₂O. 1 g Poly(meth)acrylat wird in 200 ml dieser Lösung für 15 min mit einem Magnetrührer gerührt, 45 min stehen gelassen und dann über ein 100 mesh-Sieb filtriert. Aus dem Quotienten der absorbierten Flüssigkeitsmenge und der Polymereinwaage ergibt sich der Absorptionswert.

Poly(meth)acrylat-Copolymere, die unter Verwendung von carboxylatgruppenfreien Comonomeren, insbesondere von Acrylamid hergestellt wurden. besitzen eine höhere Langzeitstabilität der Absorption gegenüber häufig wechselnden Feucht- und Trockenphasen während der Anwendung.

Die löslichen Anteile der erfindungsgemäß einzusetzenden Poly(meth)acrylate liegen üblicherweise unter 20 Gew.%, bevorzugt unter 15 Gew.% und ganz besonder bevorzugt unter 10 Gew.%.

Die Kornverteilung der einzusetzenden Polymerisate kann je nach Anwendungsfall unterschiedlich sein, üblicherweise liegt sie im Bereich von 0,2 bis 3 mm.

Weiterhin können die Poly(meth)acrylate mit Wirkstoffen beladen sein, die sic im Laufe der erfindungsgemäßcn Anwendung verzögert wieder an die Umgebung abgeben. Zu diesen Wirkstoffen zählen unter anderem Düngemittel, Herbizide und Schädlingsbekämpfungsmittel.

Die Erfindung wird nachfolgend durch die Beispiele näher erläutert.

### Beispiel 1

Steril gekeimte Sämlinge von Waldkiefern (Pinus sylvestris) wurden steril in rekonstituierter Bodenlösung (Tabelle 1) aus dem Solling angezüchtet, zu der jeweils Blei-und Cadmiumchlorid in Konzentrationen von 1 µ Mol/L zugesetzt wurden.

**Tabelle 1:**

| verwendete Nährlösung, Angaben in µ Mol/L: |
|---|
| Ca²⁺: 130, K⁺ : 350, Mg²⁺ : 82, Na⁺ : 174, Fe³⁺ : 10; |
| NO3⁻ : 644, SO4²⁻ : 85, PO4³⁻ : 16, Cl⁻ : 154 |

Die Versuchspflanzen wurden steril auf Agar-Platten ausgekeimt und dort bis zur vollen Ausbildung der Keimblätter angezogen. Danach wurden sie auf sterile Hydrokulturen umgesetzt, die unter konstanten Lichtverhältnissen (photosynthetisch aktive Photonenflußdichte von 170 uMol m⁻²s⁻¹, Licht-Dunkelwechsel 16/8h) und konstantem Raumklima (Raumtemperatur 22/20 °C Tag/Nacht) gehalten wurden. Die Nährlösung wurde wöchentlich gewechselt.

N. einer 4 wöchigen Wachstumszeit in Nährlösung ohne Zusätzen wurden die Pflanzen mit Stockosorb und Schwermetallen nach dem u.g. Schema behandelt. Die Nährlösung wurde während der Behandlungszeit ebenfalls wöchentlich gewechselt.

Für die Versuche wurden pro Versuchsvariante 30 Pflanzen eingesetzt, je drei Töpfen mit je 10 Pflanzen. Die einzelnen Töpfe wurden getrennt ausgewertet und Mittelwerte sowohl für die einzelnen Töpfe als auch für die gesamte Versuchsvariante gebildet. Zur Auswertung wurden die Pflanzen am Versuchsende photographiert, die Wurzel- und Sproßlängen gemessen, sowie die Photosyntheseraten und Trockengewichte von Wurzeln , Sproß und Nadeln ermittelt. Die Wurzel wurden aufgeschlossen und die Schwermetallgehalte im Atomabsorptionsspektrometer (AAS) bestimmt.

### Behandlungsschema

- K-: Kontrolle, ohne Schwermetalle und ohne Stockosorb.
- K-Cd,Pb: Kontrolle mit Schwermetallen, ohne Stockosorb.
- K-stock. 0,4 %: Kontrolle mit Stockosorb, ohne Schwermetalle.
- St. 0,04 %: mit 0,04 % Stockosorb und Schwermetallen
- St. 0,1 %: mit 0,1 % Stockosorb und Schwermetallen.
- St. 0,4 %: mit 0,4 % Stockosorb und Schwermetallen.

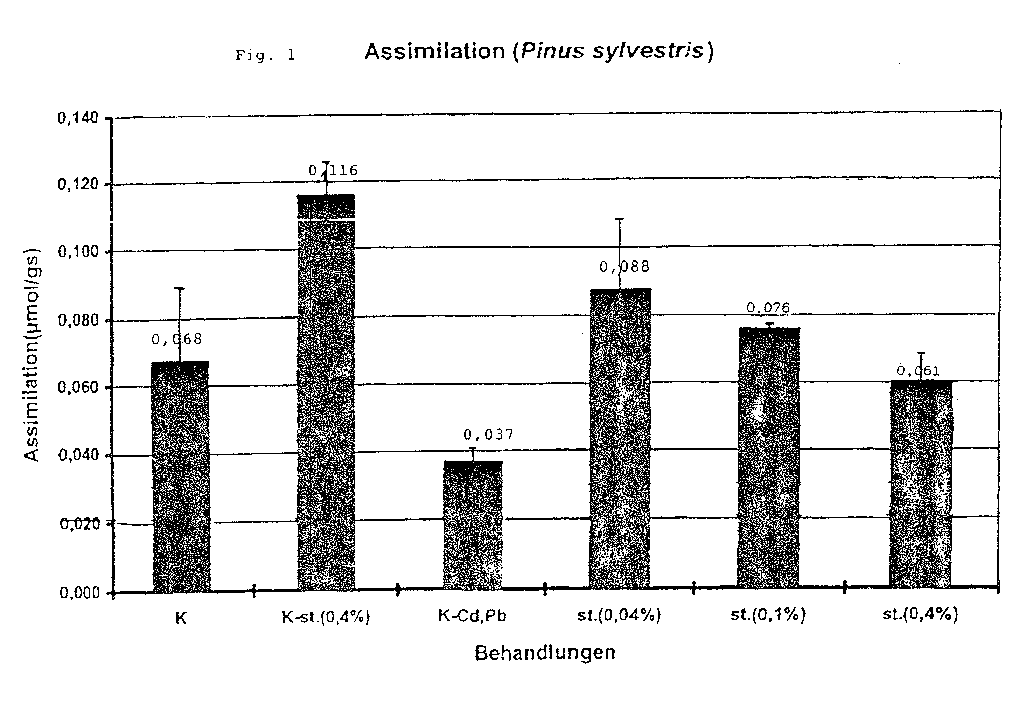

Abb. 1 zeigt die Transpirationsraten,

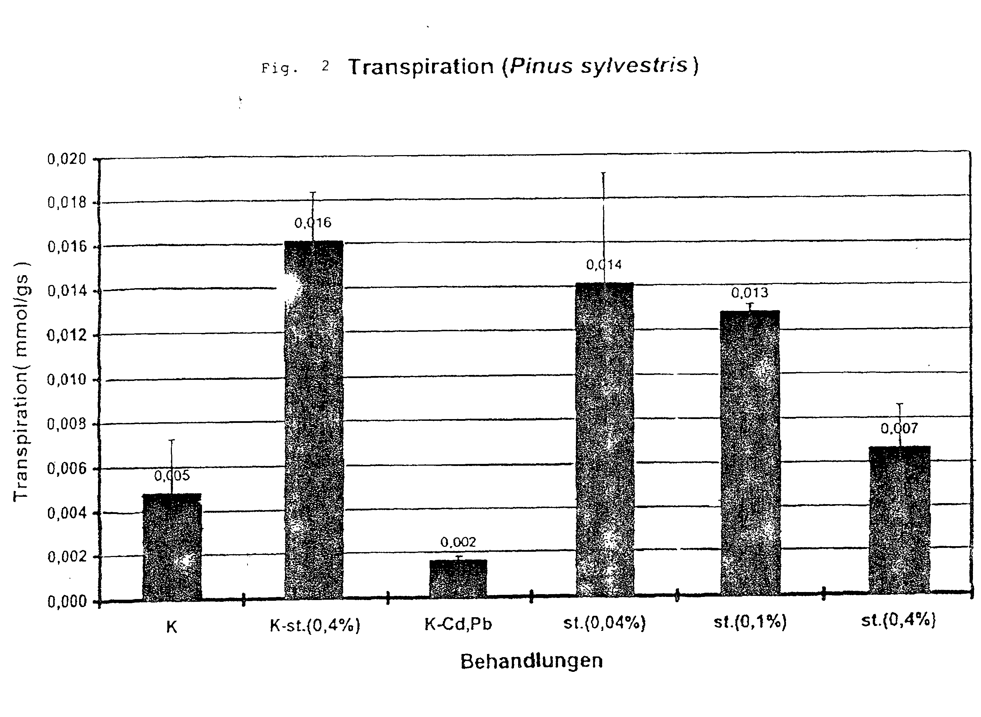

Abb. 2: die Assimilation,

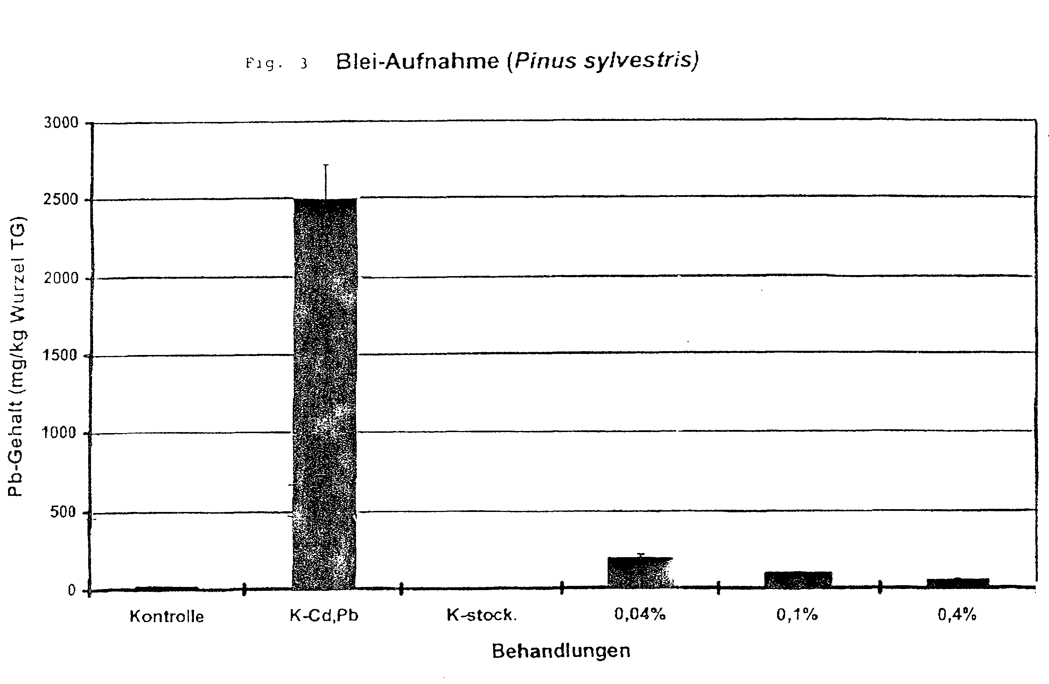

Abb. 3. die Aufnahme von Blei

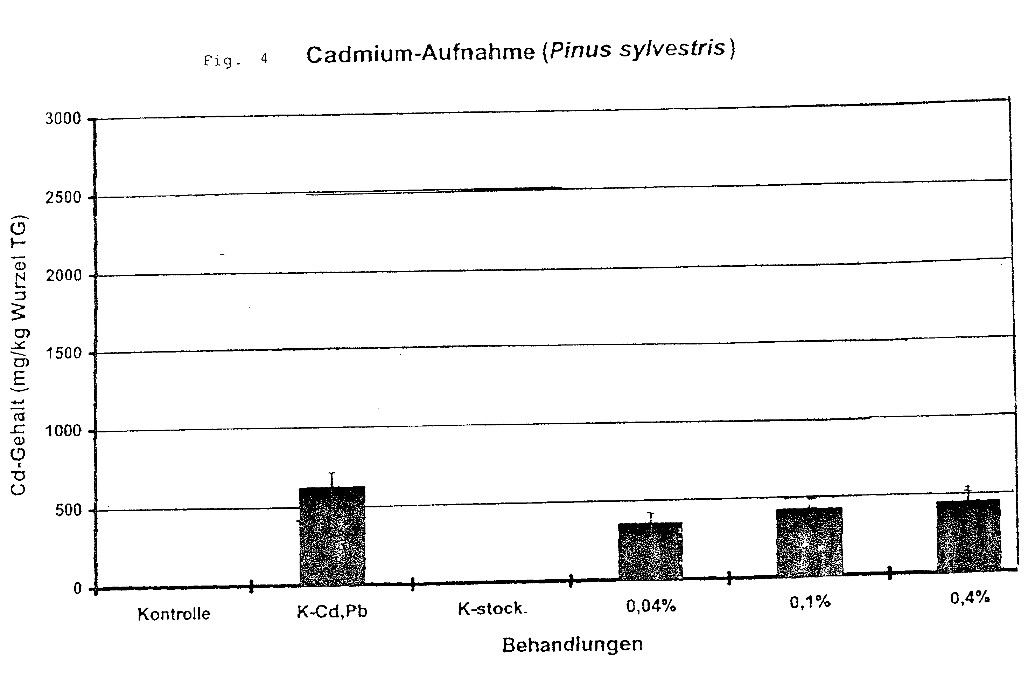

Abb. 4 die Aufnahme von Cadmium
die jeweils in den verschiedenen Versuchsvarianten ermittelt worden sind.

Es ist deutlich, daß durch die Behandlung mit Stockosorb die toxische Wirkung der Schwermetalle aufgehoben und deren Aufnahme in die Pflanze gehemmt worden sind. Ähnliche Versuchsergebnisse wurden auch bei gleichen Versuchen mit der Aleppokiefer und einer Pappelart (*Populus hupehensis*) erzielt.

### Beispiel 2.

Drei Jahre alte Fichten wurden in 12 L Containern in einen mit Blei belasteten Lehmschieferboden aus dem Harz eingepflanzt, der mit 0,6 % Stockosorb K 400 versetzt war. Kontrollversuche wurden parallel dazu mit unbehandeltem Boden angesetzt. Die Pflanzen wurden von Mai bis Oktober im Freiland gehalten, bei routinernässiger Bewässerung mit Leitungswasser.

Danach wurden die Pflanzen einer Wasserstress - Behandlung ausgesetzt, d.h. so lange nicht mehr gewässert, bis die Nadeln grau wurden und abfielen.

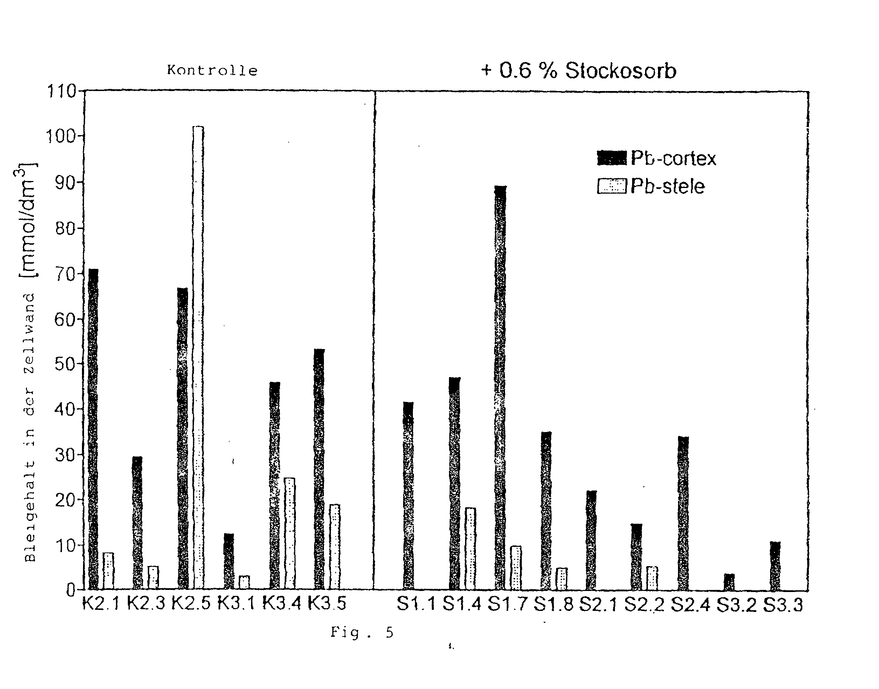

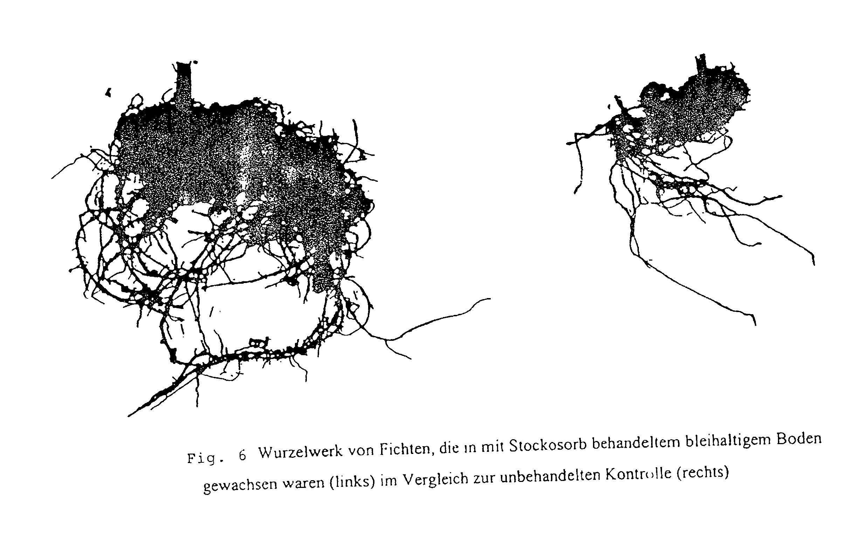

Je Behandlungsvariante wurden von je drei verschiedenen Pflanzen die Feinwurzeln entnommen und für die Lokalisation der Ionen im Elektronenmikroskop präpariert (Godbold, D.L., E. Fritz, A. Hüttermann: Aluminum toxicity and forest decline. Proc. Natl. Acad. Sci. USA 85,3888-3892 (1988).) Die Analysen der Bleigehalte der Zellwände der Wurzelrinde und des Zentralzylinders (Stele) von verschiedenen Wurzeln sind in Abb. 5 wiedergegeben. In den Wurzeln, die in den unbehandelten Böden wuchsen, wurden große Mengen von Blei sowohl in den Zellwänden der Cortex als auch in der Stele gefunden (Abb.5, control). In den Zellwänden der Wurzelrinden der Pflanzen, die in den mit Stockosorb behandelten Böden wuchsen, waren die Bleimengen geringer (Abb. 5, + 0,6 % Stockosorb), zudem wurde erheblich weniger Blei über die Endodermis in die Stele eintransportiert.

Selbst unter den fur die Pflanze sehr schwierigen Bedingungen der Bodenaustrocknung, bei der die Konzentration der Ionen in der Bodenlösung um mindestens eine Größenordnung ansteigt, war das Stockosorb wirksam.

### Beispiel 3.

Von den Pflanzen aus Beispiel 2 wurden die Wurzeln ausgewaschen. Wie Bild 6 zeigt, wurden in dem mit Stockosorb versetzten Boden erheblich mehr Wurzeln gebildet, als in der. Pflanzen, die im Kontrollboden wuchsen, wobei bei je fünf untersuchten Pflanzen in den Stockosorb - behandelten Böden viermal so viel Wurzelmasse gebildet worden ist, als auf den Kontrollböden.

## Patentansprüche

1. Verfahren zur Verminderung der Pflanzenverfügbarkeit von Schwermetallen in Substraten **dadurch gekennzeichnet, daß** die Substrate mit vernetzten Polyacrylaten bzw. Polymethacrylaten behandelt werden.

2. Verfahren nach Anspruch 1, **dadurch gekennzeichnet, daß** die Behandlung der Substrate durch Einmischen erfolgt..

3. Verfahren nach Anspruch 2, **dadurch gekennzeichnet, daß** beim Einmischen die Zugabemenge 0,1 bis 2,5 Gew.% beträgt.

4. Verfahren nach Anspruch 3, **dadurch gekennzeichnet, daß** beim Einmischen die Zugabemenge 0,5 bis 2,0 Gew.% beträgt.

5. Verfahren nach Anspruch 1, **dadurch gekennzeichnet, daß** die vernetzten Poly(meth)acrylate unter Verwendung von monoethylenisch ungesättigten, Carboxylatgruppen enthaltenden Monocarbonsäuren, insbesondere Acrylsäure bzw. deren Salze hergestellt sind.

6. Verfahren nach Anspruch 5, **dadurch gekennzeichnet, daß** die Poly(meth)acrylate unter Verwendung von weiteren monoethylenisch ungesättigten, keine Carboxylatgruppen enthaltenden Monomeren hergestellt sind, insbesondere unter Verwendung Acrylamid.

7. Verfahren nach Anspruch 5 oder 6, **dadurch gekennzeichnet, daß** die Poly(meth)acrylate unter Verwendung von Methylenbis(meth)acrylamid, Ethylenbis(meth)acrylamid, N-Methylolacrylamid oder Triallylamin als Vernetzer erhalten werden, wobei Methylenbisacrylamid bevorzugt ist.

8. Verfahren nach einem oder mehreren der Ansprüche 5 bis 7, **dadurch gekennzeichnet, daß** die Poly(meth)acrylate mit einem Nachvernetzer in Mengen von 0,01 bis 10 Gew.% bei erhöhter Temperatur, bevorzugt zwischen 80 und 250°C behandelt werden.

9. Verfahren nach einem oder mehreren der Ansprüche 5 bis 8, **dadurch gekennzeichnet, daß** die sauren Monomerbestandteile des Poly(meth)acrylates zwischen 10 und 95 Mol%, bevorzugt zwischen 50 und 90 Mol.% neutralisiert sind

10. Verfahren nach einem oder mehreren der Ansprüche 5 bis 9, **dadurch gekennzeichnet, daß** die Poly(meth)acrylate ein Absorptionvermögen für synthetische Bodenlösung von mehr als 30 g/g, bevorzugt von mehr als 50 g/g und besonders bevorzugt von mehr als 65 g/g aufweisen.

11. Verfahren nach einem oder mehreren der Ansprüche 5 bis 10, **dadurch gekennzeichnet, daß** die Poly(meth)acrylate bis zu einer Tiefe von ca. 50 cm in den sauren Boden eingearbeitet werden.

12. Verwendung von vernetzten Poly(meth)acrylaten zur Verminderung der Pflanzenverfügbarkeit von Schwermetallen in Substraten wie beispielsweise Böden oder Kulturlösungen.

## Claims

1. Process for reducing the availability to plants of heavy metals in substrates, **characterised in that** the substrates are treated with crosslinked polyacrylates or polymethacrylates.

2. Process according to claim 1, **characterised in that** the treatment is applied to the substrates by mixing it in.

3. Process according to claim 2, **characterised in that** during the mixing process the amount added is from 0.1 to 2.5 wt.%.

4. Process according to claim 3, **characterised in that** during the mixing process the amount added is from 0.5 to 2.0 wt.%.

5. Process according to claim 1, **characterised in that** the crosslinked poly(meth)acrylates are prepared using monoethylenically unsaturated monocarboxylic acids containing carboxylate groups, particularly acrylic acid, or the salts thereof.

6. Process according to claim 5, **characterised in that** the poly(meth)acrylates are prepared using other monoethylenically unsaturated monomers containing no carboxylate groups, particularly using acrylamide.

7. Process according to claim 5 or 6, **characterised in that** the poly(meth)acrylates are prepared using methylenebis(meth)acrylamide, ethylenebis(meth)acrylamide, N-methylolacrylamide or triallylamine as crosslinker, of which methylenebisacrylamide is preferred.

8. Process according to one or more of claims 5 to 7, **characterised in that** the poly(meth)acrylates are treated with a secondary crosslinker in amounts of from 0.01 to 10 wt.% at elevated temperature, preferably between 80 and 250°C.

9. Process according to one or more of claims 5 to 8, **characterised in that** the acidic monomer components of the poly(meth)acrylate are neutralised between 10 and 95 mol.%, preferably between 50 and 90 mol.%.

10. Process according to one or more of claims 5 to 9, **characterised in that** the poly(meth)acrylates have an absorptive capacity for synthetic soil solution of more than 30 g/g, preferably more than 50 g/g and most preferably more than 65 g/g.

11. Process according to one or more of claims 5 to 10, **characterised in that** the poly(meth)acrylates are incorporated in the acid soil to a depth of about 50 cm.

12. Use of crosslinked poly(meth)acrylates for reducing the availability to plants of heavy metals in substrates such as soils or culture solutions, for example.

## Revendications

1. Procédé de diminution de la disponibilité pour les plantes des métaux lourds dans les substrats,
**caractérisé en ce que**
les substrats sont traités par des polyacrylates ou par des polyméthacrylates réticulés.

2. Procédé selon la revendication 1,
**caractérisé en ce que**
le traitement des substrats s'effectue par incorporation par mélange.

3. Procédé selon la revendication 2,
**caractérisé en ce que**
dans l'incorporation par mélange, la quantité ajoutée est de 0,1 à 2,5 % en poids.

4. Procédé selon la revendication 3,
**caractérisé en ce que**
dans l'incorporation par mélange, la quantité ajoutée est de 0,5 à 2,0 % en poids.

5. Procédé selon la revendication 1,
**caractérisé en ce que**
les poly(méth)acrylates réticulés sont préparés en utilisant des acides monocarboxyliques, éthyléniquement non saturés, contenant des groupes carboxylate en particulier l'acide acrylique ou ses sels.

6. Procédé selon la revendication 5,
**caractérisé en ce que**
les poly(méth)acrylates réticulés sont préparés en utilisant des monomères supplémentaires non saturés monoéthyléniquement qui ne contiennent aucun groupe carboxylate, en particulier en utilisant l'acrylamide.

7. Procédé selon la revendication 5 ou la revendication 6,
**caractérisé en ce que**
les poly(méth)acrylates sont obtenus en utilisant le méthylène-bis(méth)acrylamide, l'éthylènebis(méth)acrylamide, le N-méthylolacrylamide, ou la triallylamine comme agent de réticulation, parmi lesquels le méthylènebisacrylamide est préféré.

8. Procédé selon l'une ou plusieurs des revendications 5 à 7,
**caractérisé en ce que**
les poly(méth)acrylates sont traités par un agent de post-réticulation en des quantités allant de 0,01 à 10 % en poids à température accrue, de préférence entre 80 et 250°C.

9. Procédé selon l'une ou plusieurs des revendications 5 à 8,
**caractérisé en ce que**
les constituants monomères acides du poly(méth)acrylate sont neutralisés entre 10 et 95 % molaire de préférence entre 50 et 90 % molaire.

10. Procédé selon l'une ou plusieurs des revendications 5 à 9,
**caractérisé en ce que**
les poly(méth)acrylates manifestent une capacité d'absorption pour une solution de sol synthétique de plus de 30 g/g, de préférence de plus de 50 g/g et d'une manière particulièrement préférée de plus de 65 g/g.

11. Procédé selon l'une ou plusieurs des revendications 5 à 10,
**caractérisé en ce que**
les poly(méth)acrylates sont incorporés dans les sols acides jusqu'à une profondeur d'environ 50 cm.

12. Utilisation de poly(méth)acrylates réticulés pour la diminution de la disponibilité pour les plantes des métaux lourds dans des substrats comme par exemple des sols ou des solutions de culture.
